# EUROPÄISCHE PATENTSCHRIFT

(11) **EP 0 840 912 B1**
(45) Veröffentlichungstag und Bekanntmachung des Hinweises auf die Patenterteilung: **31.05.2000**
(21) Anmeldenummer: 96927020.6
(22) Anmeldetag: 16.07.1996
(51) Int. Cl.: G06F 9/445

(54) **RECHNERSYSTEM**
COMPUTER SYSTEM
SYSTEME INFORMATIQUE

(30) Priorität: 21.07.1995 EP 95111536
(43) Veröffentlichungstag der Anmeldung: 13.05.1998
(73) Patentinhaber: SIEMENS AKTIENGESELLSCHAFT, 80333 München (DE)
(72) Erfinder: PÜHL, Andreas, D-82031 Grünwald (DE); BAUER, Wolfgang, D-80799 München (DE); RAMKE, Heinz-Werner, D-81539 München (DE); RUPPERT, Karl, D-82178 Puchheim (DE)
(86) Internationale Anmeldenummer: EP9603125
(87) Internationale Veröffentlichungsnummer: WO9704385

(56) Entgegenhaltungen:
- EP-A- 0 320 274
- EP-A- 0 483 433

## Beschreibung

Rechnersysteme, insbesondere Vermittlungssysteme, benötigen Anlaufsysteme (Recoverysysteme), die bei der Inbetriebnahme eines Rechnersystems oder nach Auftreten eines Alarms einen für den Betrieb des Rechnersystems geeigneten Zustand von Software und Hardware möglichst schnell wieder herstellen. Ein Anlauf des Rechnersystems ist bei der Ersteinschaltung, bei Wechsel des Rechneranlagenprogrammsystems oder nach einem Systemausfall erforderlich. Bei einem Rechnersystem, dessen Struktur ein zentrales Prozessorsystem sowie periphere Prozessorsysteme umfaßt, wird der Systemanlauf durch das zentrale Prozessorsystem des Rechnersystems gesteuert. Das zentrale Prozessorsystem steuert dabei insbesondere ein erforderliches Neuladen der peripheren Prozessorsysteme mit Daten(Code-Daten, Steuerungs-Daten usw.).

Aus dem Dokument EP-A-0 483 433 ist ein derartiges Rechnersystem bekannt.

Der Erfindung liegt die Aufgabe zugrunde, ein Rechnersystem anzugeben, das ein bei einem Anlauf des Rechnersystems notwendiges Neuladen der peripheren Prozessorsysteme möglichst schnell (und sicher) durchführt.

Diese Aufgabe wird durch ein Rechnersystem mit den Merkmalen des Anspruchs 1 gelöst.

Durch das parallele Sammeln der auf die peripheren Prozessorsysteme zu ladenden Daten durch alle Prozessoren des zentralen Prozessorsystems wird ein schneller Anlauf des Rechnersystems möglich.

Eine weitere Ausführungsform der Erfindung ist durch Anspruch 2 angegeben. Durch das temporäre Zwischenspeichern der Daten in den lokalen Speichern der zentralen Prozessoren wird ein dynamisch optimierter Gebrauch des zentralen Speichers erreicht.

Eine weitere Ausführungsform der Erfindung ist durch Anspruch 3 angegeben. Durch diese Ausgestaltung wird die Anlaufzeit des Rechnersystems weiter verkürzt.

Eine Ausführungsform der Erfindung ist durch Anspruch 4 angegeben. Durch diese Ausführungsform wird die Anlaufzeit des Rechnersystems weiter verkürzt.

Eine Ausführungsform der Erfindung ist durch Anspruch 5 angegeben. Durch das parallele Hinunterladen der Daten im Broadcast-Mode wird die Anlaufzeit weiter verkürzt.

Im folgenden wird ein Ausführungsbeispiel der Erfindung anhand der Zeichnung näher erläutert, wobei die Zeichnung drei Figuren umfaßt.

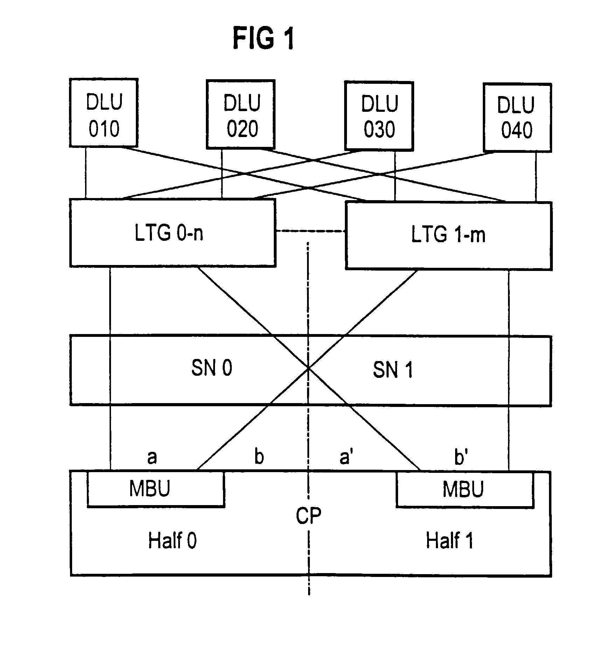

FIG 1 zeigt die Hardwarestruktur eines beispielhaften Rechnersystems, nämlich eines Vermittlungssystems. Das Vermittlungssystems umfaßt ein zentrales Prozessorsystem CP, das über ein zentrales Koppelnetz SN mit den peripheren Anschlußgruppen LTG verbunden ist, wobei es als Schnittstellen zum zentralen Koppelnetz Nachrichtenverteilereinheiten MBU umfaßt. An die peripheren Anschlußgruppen LTG sind wiederum digitale Leitungseinheiten DLU angeschlossen, die den Abschluß des gesamten Vermittlungssystems gegenüber dem Teilnehmer bilden. Das gesamte Rechnersystem ist vom zentralen Prozessorsystem CP bis zu den Anschlußgruppen LTG gedoppelt ausgeführt, weshalb selbst bei vielen hardwaremäßigen Ausfällen eine Ersatzschaltung vorgenommen werden kann und der Teilnehmer somit nichts vom Ausfall merkt.

Ist es nun aber aufgrund eines schwerwiegenden Ausfalls in der Peripherie dennoch nötig, die gesamte Peripherie (z.B. bezüglich der Teilnehmerdaten) erneut zu initialisieren, so muß dieser Recovery-Vorgang sehr schnell geschehen, da der Betrieb der Peripherie in dieser Zeit unterbrochen ist und die Betriebsgüte des Vermittlungssystem in hohem Maße von der Ausfalldauer abhängt.

Der Recovery-Vorgang umfaßt im wesentlichen zwei Vorgänge, die parallel ablaufen, nämlich einen Sammelvorgang und einen Transfervorgang. Beim Sammelvorgang werden die zu sammelnden Peripheriedaten der Datenbasis entnommen, in den lokalen Speichern LMY der zentralen Prozessoren gesammelt und von den LMYs in den CMY kopiert. Der Transfervorgang überträgt dann die im CMY zusammengestellten Peripheriedaten in die Peripherie.

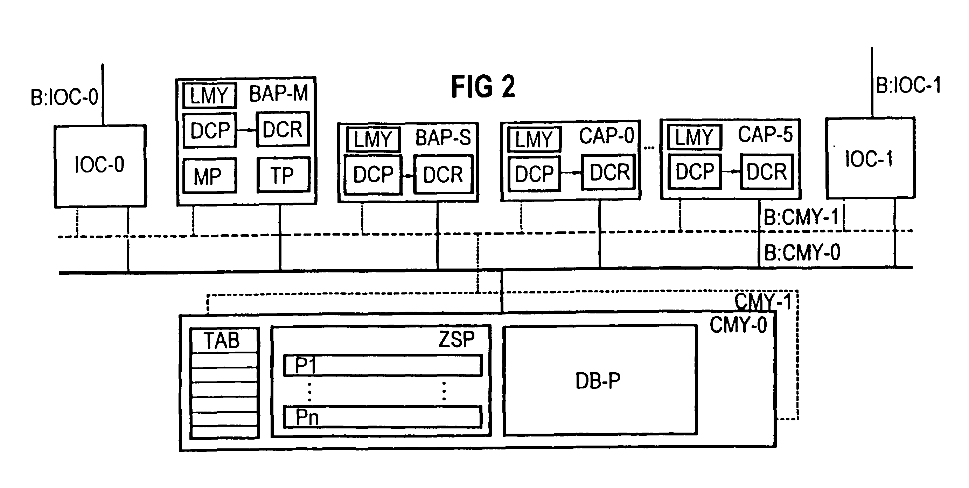

FIG 2 zeigt die Hardwarestruktur des zentralen Prozessorsystems CP sowie die für das erfindungsgemäße Recoverysystem vorhandene Softwarestruktur.

Die Hardwarestruktur des zentralen Prozessorsystems umfaßt im wesentlichen die zentralen Prozessoren BAPM, BAPS, CAP0,..., CAP5, die über ein gedoppeltes Bussystem B:CMY0,B:CMY1 mit dem gedoppelten gemeinsamen Speicher CMY0,CMY1 verbunden sind. Außerdem umfaßt der CP Ein-/Ausgabesteuerungen IOC0, IOC1 die insbesondere für die Datenübertragung zwischen CMY und MBU zuständig sind.

Die erfindungsgemäße Software-Struktur des Recoverysystems umfaßt, wie in FIG 2 dargestellt, einen Sammelprozeß DCP, der entsprechende Sammelroutinen DCR zur Durchführung des Sammelvorgangs anstößt, einen Transferprozeß TP zum Übertragen der Daten in die Peripherie sowie einen Monitorprozeß MP, der die auf den zentralen Prozessoren parallel durchgeführten Sammelvorgänge anhand einer zentralen Tabelle TAB im gemeinsamen Speicher überwacht.

Die zentrale Tabelle TAB dient zur Koordinierung des parallelen Sammelns der Daten. Sie wird zu Beginn des peripheren Anlaufs vom Betriebssystem aufgebaut und vom Monitorprozeß initialisiert.

Die Sammelprozesse auf den zentralen Prozessoren werden ebenfalls vom Betriebssystem im Falle eines durchzuführenden Anlaufs gestartet und dienen dazu, die in die Peripherie zu transferierenden Daten aus einer Datenbasis DB zu sammeln und sie in einem speziellen Speicherbereich ZSP des gemeinsamen Speichers in Form von Datenstreams zwischenzuspeichern, bevor sie in die Peripherie transferiert werden.

Für die Durchführung ihrer Arbeit bedienen sich die Sammelprozesse und der Transferprozeß der zentralen Aufgabentabelle, die die Reihenfolge angibt, nach der die Daten gesammelt und transferiert werden. Auf diese Weise unterstützt die zentrale Aufgabentabelle das transparente Sammeln und Transferieren der Daten.

Es gilt also folgendes Ablaufschema:
1. Start der Sammelprozesse und des Überwachungsprozesses (Monitorprozesses)
2. Sammeln der Daten im LMY
3. Kopieren der Daten vom LMY zum CMY
4. Transferieren der Daten vom CMY in die Peripherie

Zur Durchführung des Sammelns holen sich die Sammelprozesse jeweils eine Aufgabe von der zentralen Aufgabentabelle, sammeln die durch die Aufgabe beschriebenen Daten aus der Datenbasis DB (die Datenbasis DB ist je nach Größe des CMY entweder bereits ganz oder zumindest teilweise im CMY vorhanden) und transferieren sie in einen speziellen Speicherbereich ZSP des gemeinsamen Speichers CMY, bevor sie von dort aus durch den Transferprozeß in die Peripherie weitertransferiert werden. Die Sammelprozesse werden vom Betriebssystem auf jedem aktiven zentralen Prozessor einzeln gestartet. Bevor sie mit dem Sammeln von Daten beginnen, wird ein interner Initialisierungsvorgang durchgeführt, der die Anmeldung beim Monitorprozeß im zentralen Prozessor BAPM mit einschließt. Nach diesen Initialisierungsvorgängen werden folgende Aufgaben zyklisch durchgeführt:
- Anfordern einer Aufgabe aus der zentralen Aufgabentabelle,
- Überprüfen, ob die Behandlung der Aufgabe möglich ist,
- (Vor-)Sammeln der in der zentralen Aufgabentabelle für diese Aufgabe angegebenen Daten in den lokalen Speichern LMY der zentralen Prozessoren,
- Transferieren der gesammelten Daten in den speziellen Speicherbereich des gemeinsamen Speichers CMY.

Das Sammeln erfolgt unabhängig vom Transfer. Die Reihenfolge der Daten (verschiedener "Datenarten") ist für den Sammelprozeß egal. Der Sammelmechanismus ist somit bezüglich zukünftigen Veränderungen hinsichtlich der in die Peripherie zu transferierenden Daten (Datenmengen und Datentypen) flexibel, d.h. von diesbezüglichen Veränderungen unabhängig.

Wie oben angegeben, werden die Daten zunächst in dem lokalen Speichers eines sammelnden zentralen Prozessors gespeichert, bevor sie in den speziellen (Zwischen-)Speicherbereich ZSP des gemeinsamen Speichers transferiert werden. Das temporäre Speichern im lokalen Speicher eines zentralen Prozessors hat mehrere Vorteile. Falls ein Fehler während des Sammelvorganges auftritt, hat dies nur Auswirkungen auf einen einzigen zentralen Prozessor und dessen eigenes Speichermanagementsystem. In diesem Fall ist es nicht notwendig, den gemeinsamen Speicher in die Fehlerbehandlung miteinzubeziehen. Ein weiterer Vorteil ist darin zu sehen, daß ein Teil der zu sammelnden Daten selbst dann noch gesammelt werden kann, wenn der genannte spezielle Speicherbereich ZSP im gemeinsamen Speicher momentan nicht mehr aufnahmefähig für weitere Daten ist.

Die Sammelroutinen benutzen eine gemeinsame Schnittstelle für das Sammeln der Daten. Diese gemeinsame Schnittstelle können die Sammelroutinen auf verschiedenen zentralen Prozessoren für verschiedene Teile einer für eine Task zu sammelnden Datenmenge aufrufen. Ist der lokale Speicher eines zentralen Prozessors für die im Rahmen einer Task zu sammelnde Datenmenge bspw. zu klein, kann die Datenmenge der Task somit von mehreren Prozessoren gesammelt werden.

Wenn andererseits zu sammelnde Daten in einem Datenbereich der zentralen Datenbasis liegen, der nicht in den gemeinsamen Speicher geladen ist, muß derjenige Teil der Datenbasis, der diese Daten enthält, zuerst von der Magnetspeicherplatte MDD in den gemeinsamen Speicher kopiert werden.

Der Zwischenspeicherbereich ZSP wird von einer speziellen Instanz, dem sog. Speicherverwalter, verwaltet. Um Zugang zu dem Zwischenspeicher zu erhalten, muß eine vom Speicherverwalter zur Verfügung gestellte Zugangsroutine aufgerufen werden. Diese Routine erlaubt es, Speicherplatz anzufordern und wieder freizugeben. Der Benutzer dieser Routine muß darauf vorbereitet sein, weniger Speicherplatz zugeteilt zu bekommen oder ggf. sogar keinen Speicherplatz.

Im folgenden wird das Zusammenstellen der in die Peripherie zu transferierenden Daten im ZSP des CMY näher erläutert.

Die verschiedenen zentralen Prozessoren sammeln mit Hilfe der auf ihnen laufenden Sammelprozesse zunächst die Daten in ihren eigenen lokalen Speichern LMY. Verschiedene Sammelroutinen DCR, die von den verschiedenen Sammelprozessen zum Sammeln der Daten benötigt werden, selektieren die notwendigen Daten aus der Datenbasis DB im gemeinsamen Speicher. Diese Selektion ist notwendig, da nicht alle Daten, die in der Datenbasis liegen, auch in die Peripherie geladen werden müssen.

Die Größe des zur Verfügung stehenden Zwischenspeichers ZSP kann variiert werden und hängt von dem physikalischen Ausbau des gemeinsamen Speichers ab. Der Zwischenspeicher ZSP wird in Gruppen P1,...,Pn unterteilt. Eine Gruppe wird, nachdem sie mit zu sammelnden Daten gefüllt worden ist, für den Transferprozeß zum Transfer freigegeben. Eine Gruppe stellt somit eine Transfereinheit dar. Jede Gruppe besteht wiederum aus kleinsten Speichersegmenten (z.B. 16 KByte oder 32 KByte, Größe kann optimiert werden), die die zu transferierenden Daten enthalten. Ein Speichersegment stellt die für den Verwalter des Zwischenspeichers kleinste verwaltbare Speichereinheit dar. Ein Sammelprozeß benötigt für die Ablage der in einem Sammelvorgang gesammelten Daten im ZSP jeweils ein Speichersegment.

Das Gesagte wird im folgenden anhand eines Beispieles verdeutlicht. Gemäß einem ersten Auftrag solle eine Datenmenge von 46 KB gesammelt werden. Das kleinste Speichersegment sei 32 KB groß. Prozessor A bekommt nach Anfrage beim Überwachungsprozeß diesen ersten Auftrag. Er markiert diesen Auftrag in der zentralen Tabelle TAB und startet den Sammelvorgang in seinem lokalen Speicher. Nachdem der Sammelvorgang beendet ist, wird dies in der zentralen Tabelle eingetragen und der Transfer in den gemeinsamen Speicher wird beim Überwachungsprozeß beantragt. Ist freier Speicher in der Gruppe Px enthalten, werden die Daten vom lokalen Speicher in den gemeinsamen Speicher übertragen. Gleichzeitig wird festgehalten, daß bisher erst ein Teil der Daten des Auftrags gesammelt wurde. Ist die Gruppe Px schließlich zusammengestellt, d.h. sind alle Speichersegmente dieser Gruppe mit Peripheriedaten gefüllt, wird sie geschlossen, d.h. für den Transfer in die Peripherie freigegeben, und es wird eine noch freie Gruppe Py geöffnet. Ein Prozessor B (dieser Prozessor könnte zufällig der gleiche Prozessor wie vorher sein) fragt den Überwachungsprozeß nach zu sammelnden Daten ab. Stellt der Überwachungsprozeß (wie in diesem Beispiel) fest, daß bezüglich eines Auftrags, für den in der Gruppe Px Daten gesammelt wurden, noch weitere Daten gesammelt werden müssen, so wird bezüglich dieses Auftrags ein Nachfolgeauftrag zunächst an den Prozessor B vergeben. Erst wenn keine weiteren Daten der vorhergehenden Gruppe (Gruppe Px) gesammelt werden müssen, wird die Gruppe Py durch "neue" Aufträge, d.h. Aufträge, die keine Nachfolgeaufträge sind, gefüllt.

Zusammenfassend bedeutet das vorher Gesagte folgendes:
1. ein Datenstrom, d.h. eine für einen Auftrag (Aufgabe, Task) zu sammelnde Datenmenge, darf geteilt werden.
2. Teile eines Datenstroms müssen in aufeinanderfolgenden Gruppen in die Peripherie geladen werden.
3. Unterschiedliche Teile eines Datenstroms können von verschiedenen Prozessoren gesammelt werden.
4. Fällt ein Sammelprozeß aus, so kann der gleiche Auftrag von einem anderen Sammelprozeß übernommen werden. Die Entscheidung darüber trifft der Monitorprozeß anhand von Kriterien, wie "Mehrfach-Ausfall", "Hardware-Ausfall" oder "Software-Ausfall". Der Monitorprozeß ist somit für die Sicherheit in der kritischen Anlaufphase des Rechnersystems von entscheidender Bedeutung.

Die von den Sammelprozessen DCP benutzten Sammelroutinen DCR und der Zugang dieser Routinen zu der Datenbasis der peripheren Daten läuft unter speziellen Bedingungen ab, d.h. es gibt keine weiteren laufenden Prozesse, die zur selben Zeit Zugriff auf die Datenbasis der peripheren Daten haben. Aus diesem Grund sind die Sammelroutinen des Recovery-Vorgangs in der Weise laufzeitoptimiert, daß sie keine speziellen Zugangs- oder Schutzmechanismen, wie z.B. LOCK-Sequenzen, benützen.

Der Transferprozeß TP dient, wie bereits erwähnt, zum Übertragen der genannten Daten in die Peripherie und ist, wie der Monitorprozeß MP, ausschließlich im zentralen Prozessor BAPM implementiert. Der Transferprozeß ist dahingehend optimiert, daß er einen transparenten Down-Loading-Mechanismus (Mechanismus, der keine Dateninhalte und Datenformate kennt), der die Anwendung der Direct-Memory-Access-Methode (kurz DMA-Methode) und den Transfer über aktiven und passiven Nachrichtenkanal umfaßt.

Der Monitorprozeß überwacht das Sammeln der Daten mit Hilfe von verschiedenen Zeitgebern, d.h. er benutzt für jeden Sammelprozeß jeweils einen Zeitgeber. Durch diesen Überwachungsmechanismus erkennt der Monitorprozeß den Ausfall eines Prozessors oder einen möglichen Softwarefehler (beispielsweise eine Endlosschleife in einem Prozeß, einen Datenbasisfehler,...).

Die Sammelroutinen, die auf den genannten verschiedenen zentralen Prozessoren ablaufen, sind als unabhängige Arbeitsprozesse realisiert. Für die Synchronisation zwischen den Sammelprozessen untereinander auf der einen Seite und zwischen den Sammelprozessen und dem Monitorprozeß auf der anderen Seite wird die genannte zentrale Tabelle verwendet, die hier auch als Aufgabentabelle bezeichnet wird. Die Aufgabentabelle wird aufgebaut, nachdem eine interne Konfigurationstabelle aufgebaut worden ist. Die interne Konfigurationstabelle enthält eine Kopie der Peripherie und eine Kopie der Zustände der Peripherie. Der Monitorprozeß setzt die Aufgabentabelle in Abhängigkeit der Konfigurationstabelle zusammen und benützt sie um die verschiedenen Sammelprozesse zu überwachen.

Nachdem die Daten von den zentralen Prozessoren gesammelt sind, werden dem Transferprozeß im BAP-M für den darauffolgenden Transfer der Daten zu der Peripherie(genauer gesagt zu den peripheren Prozessoren der Anschlußgruppen LTG) Referenzen auf die gesammelten Daten übergeben. Anhand der Referenzen behandelt der BAP-M dann den Transfer zu den Anschlußgruppen. Er benützt dabei die bereits genannte DMA-Methode, d.h. er versorgt einen über die Ein-/Ausgabesteuerung angeschlossenen Ein-/Ausgabeprozessor mit entsprechenden Parametern aus der TAB und veranlaßt ihn zur Durchführung des Transfers. Der Ein-/Ausgabeprozessor besorgt sich daraufhin über die Ein-/Ausgabesteuerung einen Zeitschlitz auf dem B:CMY und wickelt über diesen den Transfer der Daten aus dem CMY zu den MBUs ab.

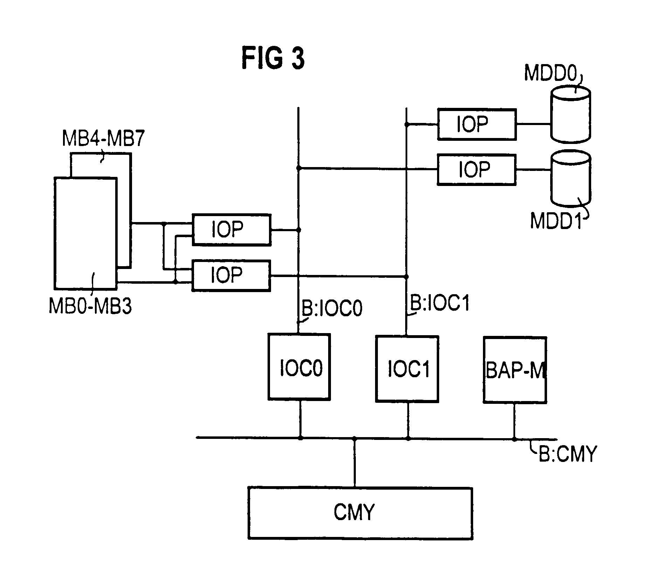

Fig 3 zeigt die HW-Struktur des CP im Hinblick auf die Transfervorgänge zischen MDD und LMY beim Vorsammeln, zwischen LMY und CMY beim Kopieren und schließlich zwischen CMY und MBU beim Transfervorgang. Das in FIG 3 dargestelle zentrale Prozessorsystem CP enthält acht Nachrichtenverteilereinheiten MBU, die jeweils acht Broadcast-Settings zur gleichen Zeit behandeln können.

Um ein optimiertes Transferieren der Daten von den MBUs zu den LTGs bzw. den Teilnehmerleitungseinheiten zu gewährleisten, werden insbesondere die folgenden zwei Methoden benützt. Die eine Methode ist das gleichzeitige Transferieren von gleichen Daten zu einer Vielzahl von Anschlußgruppen und das Transferieren mit sog. Broadcast-Settings pro MBU. Die zweite Methode ist das Transferieren der Portdaten der digitalen Leitungseinheiten über die aktiven Kanäle a,b und passiven Kanäle a' und b' gleichzeitig. Aufgrund der beiden genannten Methoden ist gewährleistet, daß für das Transferieren der Portdaten alle vorhandenen Resourcen des Rechnersystems ausgenützt werden.

Im folgenden wird die zentrale Aufgabentabelle TAB näher erläutert. Die TAB stellt das Informationszentrum für die Sammelroutinen DCR und Transferroutinen dar.

Um den Inhalt der einzelnen Felder der zentralen Aufgabentabelle zu lesen oder durch Schreiben zu verändern, werden verschiedene Zugangsroutinen zur Verfügung gestellt. Der Zugang zur zentralen Aufgabentabelle ist also nur über diese Zugangsroutinen möglich. Die Zugangsroutinen der zentralen Aufgabentabelle unterstützen einen Multiprozessorzugang. Der Monitorprozeß wird dazu benützt, den Zugang zu koordinieren.

Die zentrale Aufgabentabelle ist in zwei Teile unterteilt. Ein erster Teil wird dazu benutzt, die peripheren Einheiten zu beschreiben, für die die jeweilige Task Daten sammelt und um den momentanen Zustand der Task zu markieren. Ein zweiter Teil wird für die Verwaltung der Parameter der Sammel- und Transferroutinen benutzt und außerdem vom Monitorprozeß, um Kontrolldaten zu schreiben oder zu lesen.

Im folgenden werden einige wichtige Felder der zentralen Aufgabentabelle näher erläutert.

Ein Feld "Task" beschreibt die periphere Einheit, für die Daten gesammelt werden. Nachdem ein zentraler Prozessor diese Information von der zentralen Aufgabentabelle erhalten hat, kopiert er diese Information in seinen lokalen Speicher.

Ein Feld "Task-Control" wird benutzt, um den aktuellen Zustand einer Task zu überwachen und um das Multiprozessorkonzept zu unterstützen. Das Feld "Task-Control" kann verschiedene Werte annehmen, deren Bedeutung im folgenden näher erläutert wird.

Der Wert "FREE" zeigt an, daß die Task noch nicht bearbeitet ist. Daten wurden bis jetzt noch nicht gesammelt. Die Task-Verwaltung wird noch nicht benutzt.

Der Wert "SNAPPED" zeigt an, daß eine Task von einem Prozessor für die Bearbeitung reserviert ist. Nachdem die Variable "SNAPPED" gesetzt ist, kann kein weiterer Sammelprozeß diese Task belegen.

Der Wert "COLLECT-DATA" zeigt an, daß die Task momentan in Bearbeitung ist. Die Daten werden also momentan gesammelt.

Der Wert "READY FOR TRANSFER TO CMY" zeigt an, daß Daten im lokalen Speicher eines zentralen Prozessors gesammelt wurden und der Transfer zum gemeinsamen Speicher bevorsteht. Falls im gemeinsamen Speicher genug Speicher verfügbar ist, werden diese Daten zum gemeinsamen Speicher übertragen. Im anderen Fall muß der Sammelprozeß auf einen erneuten Start warten.

Der Wert "DATA COLLECTION FINISHED" zeigt an, daß die Bearbeitung der Task beendet ist, d.h. die Daten sind gesammelt und im gemeinsamen Speicher abgespeichert. Die Daten sind also bereit, um in die peripheren Einheiten übertragen zu werden.

Der Wert "UNPROCESSABLE" zeigt an, daß die Task nicht durchgeführt werden kann. Das Feld Task-Control erhält diesen Wert, wenn Daten nicht gesammelt werden können oder die Task-Administration nicht zugänglich ist.

Ein Wert "TRANSFER TO PERIPHERY" zeigt an, daß die Task momentan von einer Transferroutine benutzt wird. Nach dem Beenden des Transfervorgangs wird der Monitorprozeß informiert und setzt für das Statusfeld einen neuen Wert.

Ein Wert "TASK IS PROCESSED" zeigt an, daß alle Daten der Task in die Peripherie transferiert worden sind.

Im folgenden werden die Felder des zweiten Teils erläutert.

Ein Feld "COUNTER" bezeichnet eine der Gruppen P1,..,Pn durch jeweils eine Nummer. Diese Nummer wird vom Transferprozeß benutzt, um die zu der jeweiligen Gruppe zusammengestellten Daten zu den peripheren Einheiten zu transferieren.

Ein Feld "PROCESSOR-ID" beschreibt den Prozessor, der die Task behandelt, durch eine Nummer. Diese Prozessornummer wird zur Identifikation des Sammelprozesses und vom Monitorprozeß zum Zwecke der Überwachung und der Behandlung der Tasks, Prozessoren und Prozesse benutzt.

Ein Feld "PERIPHERY UNITS" beschreibt die empfangende periphere Einheit. Diese Information wird der zentralen Aufgabentabelle von der jeweiligen Sammelroutine übergeben. Desweiteren beschreibt dieses Feld die entsprechenden Einheiten, über die die Daten transferiert werden, z.B. Nachrichtenkanal, MBU oder Partneranschlußgruppe. Der Inhalt dieses Feldes wird für Broadcast-Settings und/oder von Transferroutinen benutzt.

Ein Feld "MEMORY LENGTH" beschreibt den maximal möglichen Speicherbereich, der von einer Sammelroutine zum Zwischenspeichern der Daten benutzt werden kann. Falls nicht genügend Speicherbereich verfügbar ist, sind dennoch weitere Aufrufe der Sammelroutinen erlaubt. Die Sammelroutinen können nämlich die zunächst in den lokalen Speichern sammeln und später, wenn aufgrund der parallel laufenden Transfervorgänge zur Peripherie wieder genügend Speicherbereich im Zwischenspeicher zur Verfügung steht, ihren Sammelvorgang beenden, indem sie die in den lokalen Speichern bereits gesammelten Daten in den Zwischenspeicher übertragen.

Das Feld "MEMORY LENGTH" wird initialisiert, nachdem der Sammelprozeß über den Monitorprozeß vom Verwalter des Zwischenspeichers ZSP einen entsprechenden Speicherbereich angefordert und bekommen hat. Der Sammelprozeß fordert diesen Speicherbereich an, sobald der Sammelvorgang beendet ist. Es gibt somit für jede Task einen streng definierten Speicherbereich für das Sammeln der Daten. Der Wert dieses Feldes wird der zentralen Aufgabentabelle als ein Parameter vom Aufrufer der Sammelroutinen, nämlich den Sammelprozeß, übergeben.

Ein Feld "MEMORY POINTER" beschreibt den Zeiger auf den Speicherbereich im gemeinsamen Speicher, in dem die durch die Task angegebenen Daten zwischengespeichert werden, bzw. bereits zwischengespeichert sind. Der Wert des Zeigers wird initialisiert, nachdem ein Sammelprozeß vom Speicherverwalter Speicherplatz zugewiesen bekommen hat und bevor der eigentliche Datensammelvorgang beginnt. Der initialisierte Wert bleibt auch während des gesamten Transfervorganges der Daten in die Peripherie unverändert. Der Wert wird als ein Parameter vom Aufrufer an die Sammelroutinen übergeben.

Ein Feld "CALL MARK FLAG" beschreibt den Status des Datensammelvorgangs. Das Flag wird von den Sammelroutinen an den Sammelprozeß zurückgegeben. Das Flag wird sowohl während des Sammelvorgangs vom Sammelprozeß, als auch während des Transfervorganges vom Transferprozeß interpretiert. Das Flag kann folgende Werte annehmen:

Einen Wert "FIRST RECOVERY CALL", der beim Aufruf der ersten Sammelroutine vom Aufrufer, d.h. vom Sammelprozeß geliefert wird. Dieser Wert wird für die Initialisierung des Call Mark Flags benutzt.

Einen Wert "CALL AGAIN", der dem Sammelprozeß von der aufgerufenen Sammelroutine zurückgegeben wird, wenn im gemeinsamen Speicher nicht genügend Speicher vorhanden war, um die von der Sammelroutine zu sammelnden Daten aufzunehmen. Beim nächsten Aufruf der Sammelroutine wird dieser Wert vom Aufrufer an die Sammelroutine übergeben. Die Sammelroutine versucht dann erneut, die bereits im lokalen Speicher gesammelten Daten in den Zwischenspeicher zu übertragen. Der Wert "CALL AGAIN" zeigt außerdem dem Transferprozeß an, daß vor dem Transferieren noch mehr Daten gesammelt werden müssen.

Ein Wert "CALL NEXT DATATYPE" wird von einer Sammelroutine zurückgegeben, wenn noch weitere Datentypen transferiert werden müssen. Dieser Wert zeigt dem Transferprozeß an, daß er Daten bezüglich derselben Task, die in der nächstfolgenden Gruppe zu transferieren sind, wie bisher transferieren kann, d.h. die bisherige Konfiguration zum Transferieren der Daten dieser Task beibehalten kann. Ansonsten wird bei Vorliegen des Werts "CALL NEXT DATATYPE" vom DCP und TP wie beim Wert "CALL AGAIN" verfahren.

Ein Wert "LAST CALL" wird von einer Sammelroutine zurückgegeben, wenn keine weiteren Daten mehr zusammen sind.

Ein Wert "NO CALL SUCCESS" wird von einer Sammelroutine zurückgegeben, falls während des Sammelvorgangs ein Fehler auftritt.

Alle obengenannten Werte werden von den Sammelroutinen an den Sammelprozeß zurückgegeben, der sie daraufhin in das Feld "Call Mark Flag" der zentralen Aufgabentabelle einträgt. Dort stehen sie dann dem Transferprozeß lesend zur Verfügung.

Ein Feld "CHECKSUM" wird für die Kontrolle des Datentransfers benutzt. Es gewährleistet den sicheren Datentransfer. Der Wert des Feldes wird von den aufgerufenen Sammelroutinen geliefert.

Ein Feld "CONTINUATION POINTER" beinhaltet einen Zeiger, der den internen Zustand einer Sammelroutine sichert. Wenn mehr als ein Aufruf einer Sammelroutine notwendig ist, kehrt der Zeiger durch den Sammelprozeß unverändert zurück. Der Zeiger wird von der aufgerufenen Sammelroutine zurückgeliefert.

Ein Feld "DATA LENGTH" beschreibt die tatsächlich durch eine Sammelroutine gesammelte Datenlänge. Der Wert wird von der aufgerufenen Sammelroutine geliefert und der Transferroutine zum Transfer der Daten übergeben.

Ein Feld "ERROR FLAG" beschreibt den Zustand einer Task, die nicht im ersten Versuch behandelt werden konnte. Falls es sinnvoll ist, wird ein weiterer Versuch unternommen, die Task auszuführen. Die Bedingung zur Ausführung eines weiteren Versuchs ist erfüllt, wenn ein Prozessor während des Datensammelvorgangs ausfällt. Falls jedoch ein Sammelprozeß auf eine entsprechende Aufforderung hin nicht antwortet, ist ein Datenfehler oder ein anderer Softwarefehler möglich. In diesem Fall ist ein weiterer Versuch nicht sinnvoll. Das Error Flag wird nur vom Monitorprozeß verändert. Die folgenden Werte können unterschieden werden:

Ein Wert "NO ERROR", mit dem das Error Flag initialisiert wird und der keinen Fehler anzeigt.

Ein Wert "TRY AGAIN", der eingegeben wird, falls ein Prozessor ausfällt. Bei einer solchermaßen gekennzeichneten Task wird ein weiterer Versuch zur Durchführung der Task unternommen.

Ein Wert "NO FURTHER TRY", der eingegeben wird, wenn der Monitorprozeß vom Sammelprozeß keine Antwort erhält, und der verhindert, daß ein anderer Sammelprozeß Zugang zu dieser Task erhalten kann.

Ein Feld "TASK IDENTIFICATION", das zum Transferieren der Daten mit Hilfe der DMA-Methode benutzt wird. Der Wert dieses Feldes wird von einer Transferroutine zurückgegeben, die dazu dient, den Broadcastmode zu setzen. Der Wert dieses Feldes wird von der internen Verwaltung des Ein-/Ausgabeprozessors IOP benutzt. Der Wert dieses Feldes wird außerdem vom Transferprozeß derjenigen Transferroutine übergeben,die die Daten transferiert sowie derjenigen Routine, die den Broadcastvorgang schließlich beendet.

Schließlich ein Feld "SYNC.-FIELD", das alle Daten enthält, die für die Synchronisation zwischen dem Monitorprozeß und den Sammelprozessen notwendig sind. Ein Teil dieses Feldes ist die Information, daß eine neue Task gestartet ist und falls notwendig detaillierte Fehlerinformationen.

## Patentansprüche

1. Rechnersystem mit
a) einem zentralen Prozessorsystem (CP), das das Rechnersystem zentral steuert, wobei es hierzu zentrale Prozessoren (BAPM, BAPS, CAP0,..., CAP6) und einen über ein Bussystem(B:CMY) mit diesen verbundenen gemeinsamen Speicher (CMY) umfaßt,
b) peripheren Prozessorsystemen, die periphere Einheiten(LTG,DLU) des Rechnersystems steuern,
**gekennzeichnet durch**
c) ein Recoverysystem, das im zentralen Prozessorsystem (CP) enthalten ist, und das einen Recovery der peripheren Einheiten durchführt, indem es die für den Recovery an die peripheren Einheiten zu übertragenden Daten vor ihrer Übertragung im gemeinsamen Speicher (CMY) sammelt, wobei es die zentralen Prozessoren derart steuert, daß sie das Sammeln in paralleler Weise durchführen.

2. Rechnersystem nach Anspruch 1,
**dadurch gekennzeichnet,**
ein zentraler Prozessor jeweils einen lokalen Speicher (LMY) umfaßt, in dem er die zu übertragenden Daten jeweils vorsammelt, bevor er sie an den gemeinsamen Speicher weiterleitet.

3. Rechnersystem nach Anspruch 1 oder 2,
**dadurch gekennzeichnet,**
ein bestimmter zentraler Prozessor (BAP-M) Daten in die peripheren Einheiten überträgt, während die übrigen zentralen Prozessoren gleichzeitig weitere zu übertragende Daten sammeln.

4. Rechnersystem nach einem der Ansprüche 1 bis 3,
**dadurch gekennzeichnet,**
daß ein bestimmter zentraler Prozessor (BAP-M) die in die Peripherie zu übertragenden Daten nach einer DMA-Methode überträgt.

5. Rechnersystem nach einem der Ansprüche 1 bis 4,
**dadurch gekennzeichnet,**
daß ein bestimmter zentraler Prozessor (BAP-M) die in die Peripherie zu übertragenden Daten im Broadcast-Mode in die Peripherie überträgt.

## Claims

1. Computer system having
a) a central processor system (CP), which controls the computer system centrally, the former comprising for this purpose central processors (BAPM, BAPS, CAP0,..., CAP6) and a common memory (CMY) connected to the latter via a bus system (B:CMY),
b) peripheral processor systems, which control peripheral units (LTG, DLU) of the computer system,
c) characterized by a recovery system, which is contained in the central processor system (CP) and which carries out a recovery of the peripheral units in that it collects the data to be transferred to the peripheral units for the recovery in the common memory (CMY) before the transfer of said data, controlling the central processors in such a way that they carry out the collection in parallel fashion.

2. Computer system according to Claim 1, characterized in that a central processor in each case comprises a local memory (LMY), in which it collects the data to be transferred in advance in each case, before it forwards said data to the common memory.

3. Computer system according to Claim 1 or 2, characterized in that a specific central processor (BAP-M) transfers data into the peripheral units, while the remaining central processors are at the same time collecting further data to be transferred.

4. Computer system according to one of Claims 1 to 3, characterized in that a specific central processor (BAP-M) transfers the data to be transferred into the periphery in accordance with a DMA method.

5. Computer system according to one of Claims 1 to 4, characterized in that a specific central processor (BAP-M) transfers the data to be transferred into the periphery in broadcast mode into the periphery.

## Revendications

1. Système informatique comportant
a) un système (CP) de processeurs central qui commande de manière centralisée le système informatique, le système comportant à cet effet des processeurs (BAPM, BAPS, CAP0, ..., CAP6) centraux et une mémoire (CMY) commune reliée à ces processeurs par l'intermédiaire d'un système (B : CMY) de bus,
b) des systèmes de processeurs périphériques qui commandent des unités (LTG, DLU) périphériques du système informatique,
caractérisé par
c) un système de Recovery qui est contenu dans le système (CP) de processeurs central et qui effectue un Recovery des unités périphériques en collectant dans la mémoire (CMY) commune, avant leur transmission, les données à transmettre aux unités périphériques pour le Recovery, le système commandant les processeurs centraux de telle manière qu'ils effectuent la collecte en parallèle.

2. Système informatique suivant la revendication 1, caractérisé en ce qu'un processeur central comprend chaque fois une mémoire (LMY) locale dans laquelle il précollecte chaque fois les données à transmettre avant de les retransmettre à la mémoire commune.

3. Système informatique suivant la revendication 1 ou 2, caractérisé en ce qu'un processeur (BAP-M) central déterminé transmet des données aux unités périphériques tandis que les processeurs centraux restants collectent simultanément des données supplémentaires à transmettre.

4. Système d'ordinateur suivant l'une des revendications 1 à 3, caractérisé en ce qu'un processeur (BAP-M) central déterminé transmet suivant une méthode (DMA)les données à transmettre à la périphérie.

5. Système d'ordinateur suivant l'une des revendications 1 à 4, caractérisé en ce qu'un processeur (BAP-M) central déterminé transmet en mode Broadcast à la périphérie les données à transmettre à la périphérie.
